# EUROPEAN PATENT APPLICATION

(11) **EP 4 550 864 A1**
(43) Date of publication of application: **07.05.2025**
(21) Application number: 23849182.3
(22) Date of filing: 12.07.2023
(51) Int. Cl.: H04W 16/10

(54) **INFORMATION REPORTING METHOD AND APPARATUS, COMMUNICATION NODE, AND STORAGE MEDIUM**

(30) Priority: 04.08.2022 CN 202210933537
(71) Applicant: ZTE Corporation, Shenzhen, Guangdong 518057 (CN)
(72) Inventor: WANG, Yuxin, Shenzhen, Guangdong 518057 (CN); LU, Zhaohua, Shenzhen, Guangdong 518057 (CN); LIU, Wenfeng, Shenzhen, Guangdong 518057 (CN); XIAO, Huahua, Shenzhen, Guangdong 518057 (CN); ZHENG, Guozeng, Shenzhen, Guangdong 518057 (CN); LI, Lun, Shenzhen, Guangdong 518057 (CN); LI, Yong, Shenzhen, Guangdong 518057 (CN)
(74) Representative: Aipex B.V.
(86) International application number: PCT/CN2023/106869
(87) International publication number: WO 2024/027473

(57) **Abstract**

Provided are an information reporting method and apparatus, a communication node, and a storage medium. The method includes: receiving P channel state information reference signals (CSI-RSs) or P synchronization signal blocks (SSBs) from a base station; measuring the P CSI-RSs or the P SSBs to obtain reference signal received powers (RSRPs) of the P CSI-RSs or RSRPs of the P SSBs; and predicting measurement information of Q CSI-RSs or Q SSBs based on the RSRPs of the P CSI-RSs or the RSRPs of the P SSBs, and reporting the measurement information, where P is a positive integer greater than or equal to 1, and Q is a positive integer greater than or equal to P.

## Description

This application claims priority to Chinese Patent Application No. 202210933537.8 filed with the China National Intellectual Property Administration (CNIPA) on Aug. 04, 2022, the disclosure of which is incorporated herein by reference in its entirety.

### TECHNICAL FIELD

The present application relates to the field of communications, for example, an information reporting method and apparatus, a communication node, and a storage medium.

### BACKGROUND

As resources in a low-frequency band are increasingly short with the rapid development of wireless communication technology, a millimeter wave band which has more spectrum resources and a larger bandwidth has become an important frequency band for future wireless communication systems. However, the millimeter wave band has a relatively short wavelength, so the propagation conditions for the millimeter wave band are much more demanding than the propagation conditions for a conventional frequency band having a wavelength of 6 GHz or below. For example, the millimeter wave band is faced with a high path loss and is sensitive to congestion. To overcome the above problems, a millimeter wave signal usually needs to be beamformed so that the energy of the signal is concentrated into a small angular space to form a beamformed beam with a larger gain. Beam management achieves the alignment of the beam direction of a transmitter and the beam direction of a receiver by establishing and maintaining a suitable beam pair to obtain the best transmission performance. The beam management, including beam scanning, beam measurement, beam reporting, and beam indication, is critical to a millimeter wave communication system.

The beam scanning refers to a process in which a base station or a user equipment (UE) sequentially uses different analog beams to cover a spatial region. During the beam scanning, the base station or the UE sequentially sends beams from an entire codebook or a subset of the codebook to find a great transceive beam pair for a data channel and a control channel. The process of the beam scanning mainly includes a beam scanning P-2 process at a transmitting end and a beam scanning P-3 process at a receiving end.

Specifically, in the P-2 beam management process, the base station configures higher-layer parameter resource sets NZP-CSI-RS-ResourceSet. Each resource set includes multiple channel state information-reference signal (CSI-RS) resources sent through different transmit beams or multiple synchronization signal block (SSB) resources sent through different transmit beams. The UE receives and measures the CSI-RS resources or the SSB resources by using a fixed receiving beam to complete the beam measurement process at the transmitting end. In addition, if the base station does not provide auxiliary information on a receiving beam of a UE side, the UE may need to pool receiving beams, that is, a CSI-RS resource set for beam management may be repeatedly transmitted multiple times. The UE may use different receiving beams for reception, thereby achieving the scanning of the receiving beams. In the P-3 beam management process, the base station configures higher-layer parameter resource sets NZP-CSI-RS-ResourceSet. Each resource set includes multiple CSI-RS resources sent through the same transmit beam or multiple SSB resources sent through the same transmit beam. The UE receives and measures the CSI-RS resources or the SSB resources by using different receiving beams to achieve the scanning of the receiving beams. In addition, the base station may need to pool transmitting beams, that is, the base station may need to configure multiple CSI-RS resource sets sent through different transmitting beams, to achieve the scanning of the transmitting beams.

Since the beam is generally selected from a predetermined analog beam codebook, exhaustive scanning of all transceive beam pairs in the codebook is an optimal beam training scheme. However, such a scheme may cause an excessive training overhead, high measurement power consumption, and a large processing delay.

### SUMMARY

The present application provides an information reporting method and apparatus, a communication node, and a storage medium to reduce a beam training overhead in a time domain or a spatial domain and obtain an ideal beamforming gain and an ideal spectral efficiency under the condition of a smaller beam training overhead.

In a first aspect, embodiments of the present application provide an information reporting method. The method is applied to a terminal and includes the following.

P CSI-RSs or P SSBs are received from a base station.

The P CSI-RSs or the P SSBs are measured to obtain reference signal received powers (RSRPs) of the P CSI-RSs or RSRPs of the P SSBs.

Measurement information of Q CSI-RSs or Q SSBs is predicted based on the RSRPs of the P CSI-RSs or the RSRPs of the P SSBs, and the measurement information is reported, where P is a positive integer greater than or equal to 1, and Q is a positive integer greater than or equal to P.

In a second aspect, the embodiments of the present application also provide an information reporting method. The method is applied to a base station and includes the following.

P CSI-RSs or P SSBs are sent to a terminal.

Measurement information of Q CSI-RSs or Q SSBs is received from the terminal, and an optimal CSI-RS or an optimal SSB is determined based on the measurement information, where the measurement information of the Q CSI-RSs or the Q SSBs is predicted based on the P CSI-RSs or the P SSBs, P is a positive integer greater than or equal to 1, and Q is a positive integer greater than or equal to P.

In a third aspect, the embodiments of the present application also provide an information reporting apparatus. The apparatus includes a first receiving module, a measurement module, and a reporting module.

The first receiving module is configured to receive P CSI-RSs or P SSBs from a base station.

The measurement module is configured to measure the P CSI-RSs or the P SSBs to obtain RSRPs of the P CSI-RSs or RSRPs of the P SSBs.

The reporting module is configured to predict measurement information of Q CSI-RSs or Q SSBs based on the RSRPs of the P CSI-RSs or the RSRPs of the P SSBs and report the measurement information, where P is a positive integer greater than or equal to 1, and Q is a positive integer greater than or equal to P.

In a fourth aspect, the embodiments of the present application also provide an information reporting apparatus. The apparatus includes a sending module and a second receiving module.

The sending module is configured to send P CSI-RSs or P SSBs to a terminal.

The second receiving module is configured to receive measurement information of Q CSI-RSs or Q SSBs from the terminal and determine an optimal CSI-RS or an optimal SSB based on the measurement information, where the measurement information of the Q CSI-RSs or the Q SSBs is predicted based on the P CSI-RSs or the P SSBs, where P is a positive integer greater than or equal to 1, and Q is a positive integer greater than or equal to P.

In a fifth aspect, the embodiments of the present application provide a communication node. The communication node includes one or more processors and a storage apparatus.

The storage apparatus is configured to store one or more programs.

The one or more programs, when executed by the one or more processors, cause the one or more processors to perform the method described in the first and second aspects of the present application.

In a sixth aspect, the embodiments of the present application provide a storage medium. The storage medium is configured to store a computer program which, when executed by a processor, causes the processor to perform any method described in the embodiments of the present application.

The preceding embodiments and other aspects of the present application as well as implementations thereof are described in more detail in the description of drawings, detailed description, and claims.

### BRIEF DESCRIPTION OF DRAWINGS

FIG. 1 is a first flowchart of an information reporting method according to an embodiment of the present application;
FIG. 2 is a structure diagram of a beam pair according to an embodiment of the present application;
FIG. 3 is a second flowchart of an information reporting method according to an embodiment of the present application;
FIG. 4 is a third flowchart of an information reporting method according to an embodiment of the present application;
FIG. 5 is a fourth flowchart of an information reporting method according to an embodiment of the present application;
FIG. 6 is a fifth flowchart of an information reporting method according to an embodiment of the present application;
FIG. 7 is a sixth flowchart of an information reporting method according to an embodiment of the present application;
FIG. 8 is a seventh flowchart of an information reporting method according to an embodiment of the present application;
FIG. 9 is an eighth flowchart of an information reporting method according to an embodiment of the present application;
FIG. 10 is a ninth flowchart of an information reporting method according to an embodiment of the present application;
FIG. 11 is a first structure diagram of an information reporting apparatus according to an embodiment of the present application;
FIG. 12 is a second structure diagram of an information reporting apparatus according to an embodiment of the present application; and
FIG. 13 is a structure diagram of a communication node according to an embodiment of the present application.

### DETAILED DESCRIPTION

Objects, solutions, and advantages of the present application will be more apparent from a detailed description of embodiments of the present disclosure in conjunction with the drawings. It is to be noted that if not in collision, embodiments of the present application and the features therein may be combined with each other.

The steps illustrated in the flowcharts among the drawings may be performed by, for example, a computer system capable of executing a set of computer-executable instructions. Moreover, although logical sequences are illustrated in the flowcharts, in some cases, the illustrated or described steps may be performed in sequences different from those described herein.

The beam in the following embodiments is a spatial domain transmission filter or a spatial domain reception filter or is an antenna weight vector/antenna weight matrix. Different transmit beams are implemented by using different transmission filters or different antenna weight vectors/antenna weight matrices, and different receive beams are implemented by using different reception filters or different antenna weight vectors/antenna weight matrices.

### Embodiment one

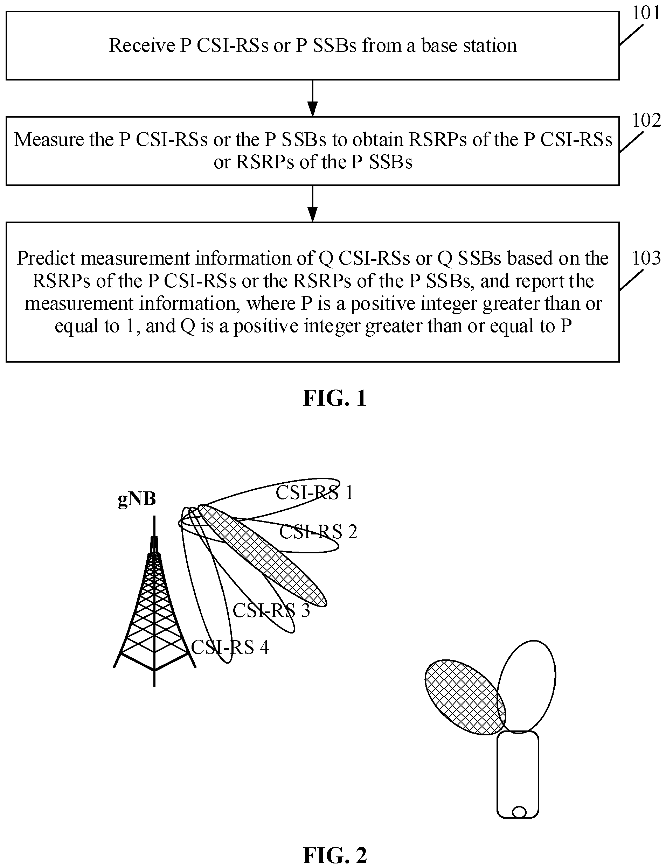

FIG. 1 is a first flowchart of an information reporting method according to an embodiment of the present application. The method may be executed by an information reporting apparatus or a terminal. The apparatus or the terminal may be implemented by software and/or hardware and may be integrated into any intelligent device having a network communication function. As shown in FIG. 1, the information reporting method may include S101 to S103.

In S101, P CSI-RSs or P SSBs are received from a base station.

In S101, the terminal may receive P CSI-RSs or P SSBs from the base station. For example, the base station may send a beam 1 to the terminal based on CSI-RS1, send a beam 2 to the terminal based on CSI-RS2, ..., and send a beam P to the terminal based on CSI-RSP. Therefore, the terminal may receive the beams sent by the base station based on the CSI-RSs.

In S102, the P CSI-RSs or the P SSBs are measured to obtain RSRPs of the P CSI-RSs or RSRPs of the P SSBs.

In S102, the terminal may measure the P CSI-RSs to obtain the RSRPs of the P CSI-RSs or measure the P SSBs to obtain the RSRPs of the P SSBs. The RSRP is an average value of the signal power received on all resource elements (REs) carrying a cell-specific reference signal (CRS) within an orthogonal frequency division multiplexing (OFDM) symbol. The RSRP is one of the important bases for cell reselection and cell handover of a UE, and the accuracy of the RSRP directly determines the accuracy of cell reselection and cell handover of the UE and thus affects the performance of the whole system. Due to the limitations of the antenna size and propagation conditions, the massive beam technology is used in a high-frequency band to compensate for path propagation loss, and for considerations of cost and power consumption, analog beamforming or hybrid (analog + digital) beamforming is the main technological means. Therefore, a beam management mechanism, including a beam measurement and reporting mechanism and a beam indication mechanism, is designed for a 5G base station to enable the base station and the terminal to align a transmit beam and a receive beam.

FIG. 2 is a structure diagram of a beam pair according to an embodiment of the present application. As shown in FIG. 2, after the base station selects a transmit beam, a signal is transmitted in a specific direction, and the terminal needs to use a receive beam corresponding to the transmit beam of the base station to receive the signal. If the terminal does not use the receive beam corresponding to the transmit beam of the base station, the quality of the signal received by the terminal is degraded or even the terminal fails to receive a useful signal. Therefore, the transmit beam and the receive beam have a certain correspondence, and such a correspondence is called a beam pair. To achieve the alignment of the transmit and receive beams, the base station transmits a reference signal in the manner of beam scanning. If a base station is able to transmit M beams, the base station may configure one reference signal for each beam for beam measurement, and each reference signal is beamformed using the corresponding beam. The beam measurement is a process in which the base station or the terminal measures the quality and characteristics of a received beamformed signal. In the beam management process, the terminal or the base station identifies the best beam through relevant measurements. In the downlink direction, the 3GPP defines a beam measurement reporting process based on layer 1-reference signal received power (L1-RSRP) to support beam selection and beam reselection, and such a measurement may be based on an SSB or a CSI-RS assigned to the terminal. Beam information measurement and reporting may be performed fast through the L1-RSRP, and the measurement is performed based on the L1 without the process of L3 filtering.

FIG. 2 shows a next-generation NodeB (gNB).

In an embodiment, the terminal may receive P CSI-RSs or P SSBs from the base station, measure the P CSI-RSs or the P SSBs to obtain RSRPs of the P CSI-RSs or RSRPs of the P SSBs, input the RSRPs of the P CSI-RSs or the RSRPs of the P SSBs into an artificial intelligence (AI) model, and predict target CSI-RSs or target SSBs through the AI model. For example, the terminal may input the RSRPs of CSI-RS1, CSI-RS2, CSI-RS3, and CSI-RS4 into the AI model. If the beam index corresponding to the largest RSRP output from the AI model is not within the range of CSI-RS1, CSI-RS2, CSI-RS3, and CSI-RS4, for example, if the optimal beam is between beams corresponding to CRI2 and CRI3, according to the existing 5G standard protocols, the terminal is unable to report the optimal beam output from the AI model.

In S103, measurement information of Q CSI-RSs or Q SSBs is predicted based on the RSRPs of the P CSI-RSs or the RSRPs of the P SSBs, and the measurement information is reported, where P is a positive integer greater than or equal to 1, and Q is a positive integer greater than or equal to P.

In S103, the terminal may predict measurement information of Q CSI-RSs based on the RSRPs of the P CSI-RSs or predict measurement information of Q SSBs based on the RSRPs of the P SSBs and report the measurement information, where P is a positive integer greater than or equal to 1, and Q is a positive integer greater than or equal to P. Compared to the conventional exhaustive scanning method, the terminal in the present application just needs to transmit or measure beams at some times or in part of the spatial domain to predict beams at other times or in other parts of the spatial domain, thereby reducing the beam training overhead in the time domain or the spatial domain and obtaining an ideal beamforming gain and an ideal spectral efficiency under the condition of a smaller beam training overhead.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment two

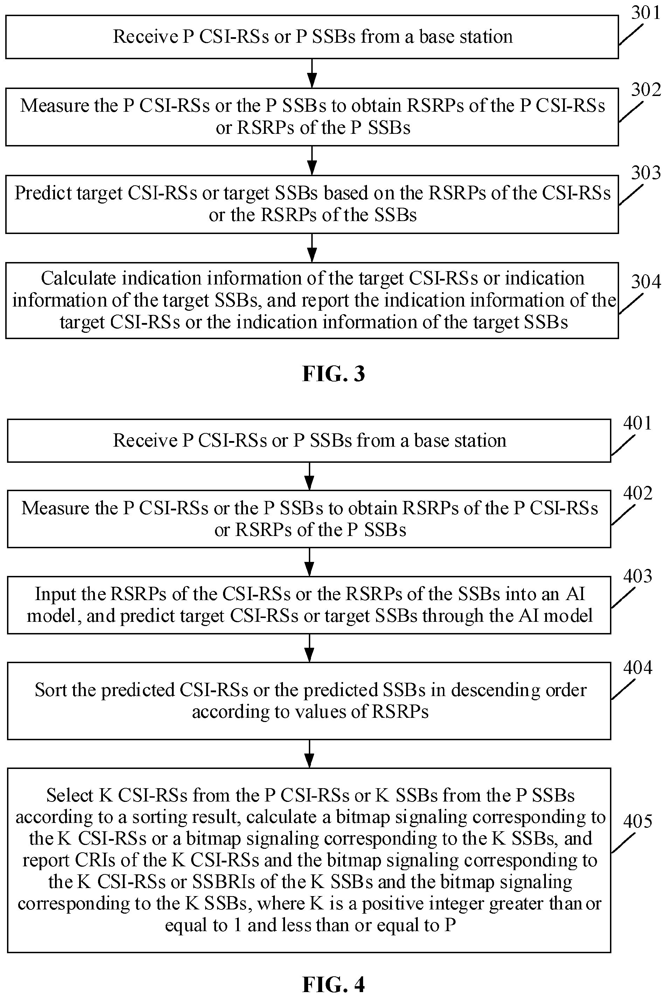

FIG. 3 is a second flowchart of an information reporting method according to an embodiment of the present application. The embodiment is further optimized and extended on the basis of the solution described above and can be combined with the optional implementations described above. As shown in FIG. 3, the information reporting method may include S301 to S304.

In S301, P CSI-RSs or P SSBs are received from a base station.

In S302, the P CSI-RSs or the P SSBs are measured to obtain RSRPs of the P CSI-RSs or RSRPs of the P SSBs.

In S303, target CSI-RSs or target SSBs are predicted based on the RSRPs of the CSI-RSs or the RSRPs of the SSBs.

In S303, the terminal may predict target CSI-RSs based on the RSRPs of the CSI-RSs or predict target SSBs based on the RSRPs of the SSBs. For example, the terminal may input the RSRPs of the P CSI-RSs or the RSRPs of the P SSBs into an AI model and predict the target CSI-RSs or the target SSBs through the AI model. For example, the terminal may input the RSRPs of CSI-RS1, CSI-RS2, CSI-RS3, and CSI-RS4 into the AI model. If the beam index corresponding to the largest RSRP output from the AI model is not within the range of CSI-RS 1, CSI-RS2, CSI-RS3, and CSI-RS4, for example, if the optimal beam is between beams corresponding to CRI2 and CRI3, according to the existing 5G standard protocols, the terminal is unable to report the optimal beam output from the AI model.

In S304, indication information of the target CSI-RSs or indication information of the target SSBs is calculated, and the indication information of the target CSI-RSs or the indication information of the target SSBs is reported.

In S304, the terminal may calculate indication information of the target CSI-RSs or indication information of the target SSBs and determine the indication information of the target CSI-RSs or the indication information of the target SSBs as the measurement information. For example, the terminal may calculate the indication information of the target CSI-RSs or the indication information of the target SSBs in two manners. In the first manner, predicted target CSI-RSs or predicted target SSBs are sorted in descending order according to values of RSRPs; K CSI-RSs are selected from the P CSI-RSs or K SSBs are selected from the P SSBs according to a sorting result, and a bitmap signaling corresponding to the K CSI-RSs or a bitmap signaling corresponding to the K SSBs is calculated; and CSI-RS resource indicators (CRIs) of the K CSI-RSs and the bitmap signaling corresponding to the K CSI-RSs are determined as the indication information of the target CSI-RSs or SSB resource indicators (SSBRIs) of the K SSBs and the bitmap signaling corresponding to the K SSBs are determined as the indication information of the target SSBs, where K is a positive integer greater than or equal to 1 and less than or equal to P. In the second manner, the RSRPs of the CSI-RSs or the RSRPs of the SSBs are input into an AI model, and RSRPs of the Q CSI-RSs or RSRPs of the Q SSBs are output from the AI model; K CSI-RSs are selected from the Q CSI-RSs or K SSBs are selected from the Q SSBs, where Q is a positive integer greater than or equal to P; and offset information of each of the K CSI-RSs or offset information of each of the K SSBs is calculated, and the offset information of each of the K CSI-RSs is determined as the indication information of the target CSI-RSs or the offset information of each of the K SSBs is determined as the indication information of the target SSBs.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, the measurement information of other CSI-RSs or other SSBs is predicted without the need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment three

FIG. 4 is a third flowchart of an information reporting method according to an embodiment of the present application. The embodiment is further optimized and extended on the basis of the solutions described above and can be combined with the optional implementations described above. As shown in FIG. 4, the information reporting method may include S401 to S405.

In S401, P CSI-RSs or P SSBs are received from a base station.

In S402, the P CSI-RSs or the P SSBs are measured to obtain RSRPs of the P CSI-RSs or RSRPs of the P SSBs.

In S403, the RSRPs of the CSI-RSs or the RSRPs of the SSBs are input into an AI model, and target CSI-RSs or target SSBs are predicted through the AI model.

In S404, the predicted CSI-RSs or the predicted SSBs are sorted in descending order according to values of RSRPs.

In S405, K CSI-RSs are selected from the P CSI-RSs or K SSBs are selected from the P SSBs according to a sorting result, a bitmap signaling corresponding to the K CSI-RSs or a bitmap signaling corresponding to the K SSBs is calculated, and CRIs of the K CSI-RSs and the bitmap signaling corresponding to the K CSI-RSs are reported or SSBRIs of the K SSBs and the bitmap signaling corresponding to the K SSBs are reported, where K is a positive integer greater than or equal to 1 and less than or equal to P.

In an embodiment, the reported CRI information is redefined in the case where the terminal performs beam prediction by using AI. The bitmap signaling is reported on the basis of the existing CRI reporting mechanism. For example, as shown in FIG. 2, when a network side configures the number K of the CRIs to be reported as 1, 2, 3, and 4, respectively, the terminal reports the following information: when K = 1, {CRI2} is reported, and the bitmap is 1, indicating that an optimal or recommended beam (located between the beam where the CSI-RS2 is located and the beam where the CSI-RS3 is located and marked in black) predicted by the terminal is located behind the beam (that is, the beam used by the base station to send CSI-RS2) corresponding to CRI2; when K = 2, {CRI2, CRI3} are reported, and the bitmap is 10, indicating that the optimal or recommended beam predicted by the terminal is located behind the beam corresponding to CRI2 and is also located behind the beam corresponding to CRI3; when K = 3, {CRI2, CRI3, CRI1} are reported, and the bitmap is 101, indicating that the optimal or recommended beam predicted by the terminal is located behind the beams corresponding to CRI1 and CRI2 and is also located behind the beam corresponding to CRI3; when K = 4, {CRI2, CRI3, CRI1, CRI4} are reported, and the bitmap is 1010, indicating that the optimal or recommended beam predicted by the terminal is located behind the beams corresponding to CRI1 and CRI2 and is also located behind the beams corresponding to CRI3 and CRI4. Therefore, if a certain bit in the bitmap signaling is 1, it is indicated that the optimal or recommended beam is located behind the CRI corresponding to the bit; if a certain bit is 0, it is indicated that the optimal or recommended beam is located before the CRI corresponding to the bit. Alternatively, if a certain bit in the bitmap signaling is 0, it is indicated that the optimal or recommended beam is located behind the CRI corresponding to the bit; if a certain bit is 1, it is indicated that the optimal or recommended beam is located before the CRI corresponding to the bit. That is, in the present application, two different bits in the bitmap signaling may be used for indicating that the optimal or recommended beam is located before and after the CRI corresponding to the bit. For example, if a certain bit is a first bit, it is indicated that the optimal or recommended beam is located before the CRI corresponding to the bit; if a certain bit is a second bit, it is indicated that the optimal or recommended beam is located behind the CRI corresponding to the bit.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment four

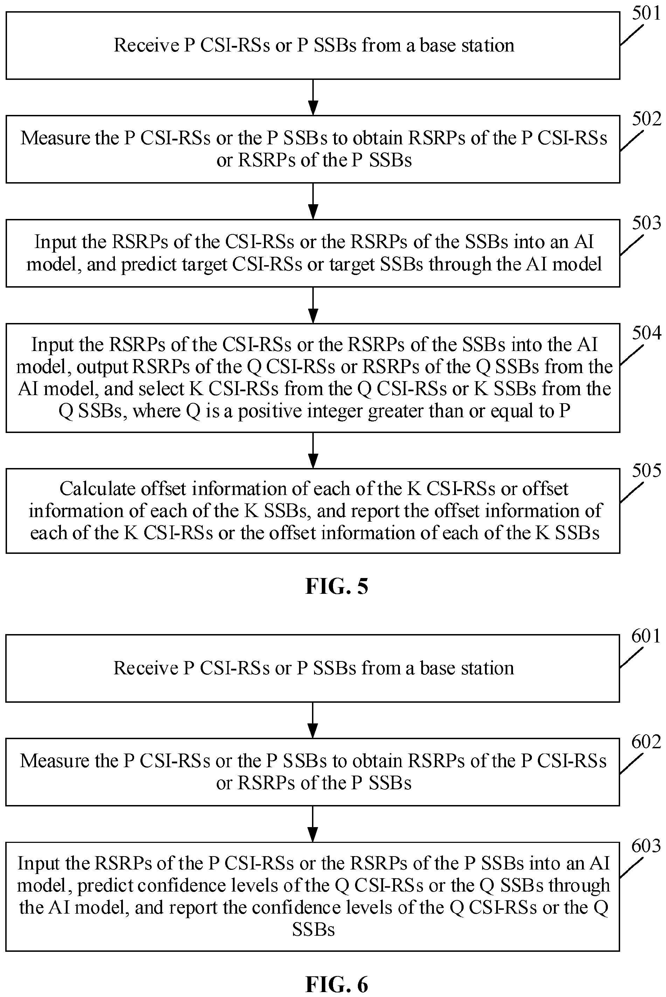

FIG. 5 is a fourth flowchart of an information reporting method according to an embodiment of the present application. The embodiment is further optimized and extended on the basis of the solutions described above and can be combined with the optional implementations described above. As shown in FIG. 5, the information reporting method may include S501 to S505.

In S501, P CSI-RSs or P SSBs are received from a base station.

In S502, the P CSI-RSs or the P SSBs are measured to obtain RSRPs of the P CSI-RSs or RSRPs of the P SSBs.

In S503, the RSRPs of the CSI-RSs or the RSRPs of the SSBs are input into an AI model, and target CSI-RSs or target SSBs are predicted through the AI model.

In S504, the RSRPs of the CSI-RSs or the RSRPs of the SSBs are input into the AI model, RSRPs of the Q CSI-RSs or RSRPs of the Q SSBs are output from the AI model, and K CSI-RSs are selected from the Q CSI-RSs or K SSBs are selected from the Q SSBs, where Q is a positive integer greater than or equal to P.

In S505, offset information of each of the K CSI-RSs or offset information of each of the K SSBs is calculated, and the offset information of each of the K CSI-RSs or the offset information of each of the K SSBs is reported.

In an embodiment, the terminal may calculate offset information of a CRI of each of the K CSI-RSs with respect to a CRI of one CSI-RS among CSI-RSs that have been sent or offset information of an SSBRI of each of the K SSBs with respect to an SSBRI of one SSB among SSBs that have been sent, and determine the offset information of the CRI of each of the K CSI-RSs with respect to the CRI of the one CSI-RS as the offset information of each of the K CSI-RSs or the offset information of the SSBRI of each of the K SSBs with respect to the SSBRI of the one SSB as the offset information of each of the K SSBs. For example, assuming that the base station sends four beams based on CSI-RS1, CSI-RS2, CSI-RS3, and CSI-RS4, the terminal measures the four beams to obtain RSRPs of the four beams, respectively. The terminal may input the RSRP information of the four beams into the AI model, the AI model predicts and outputs RSRPs of Q beams (Q >= 4), and the terminal selects K optimal beams (for example, the first K beams having the largest RSRP) from the Q beams to report. Offset information of the K beams with respect to an i^{th} beam (for example, the first beam sent based on CSI-RS1) that has been sent may be reported.

In an embodiment, the terminal may also calculate offset information of a CRI of each of the K CSI-RSs with respect to a CRI of one CSI-RS having the largest RSRP among CSI-RSs that have been sent or offset information of an SSBRI of each of the K SSBs with respect to an SSBRI of one SSB having the largest RSRP among SSBs that have been sent, and determine the offset information of the CRI of each of the K CSI-RSs with respect to the CRI of the one CSI-RS having the largest RSRP as the offset information of each of the K CSI-RSs or the offset information of the SSBRI of each of the K SSBs with respect to the SSBRI of the one SSB having the largest RSRP as the offset information of each of the K SSBs. For example, assuming that the base station sends four beams based on CSI-RS1, CSI-RS2, CSI-RS3, and CSI-RS4, the terminal measures the four beams to obtain RSRPs of the four beams, respectively. The terminal may input the RSRP information of the four beams into the AI model, the AI model predicts and outputs RSRPs of Q beams (N >= 4), and the terminal selects K optimal beams (for example, the first K beams having the largest RSRP) from the Q beams to report. Offset information of the K beams with respect to a beam (for example, the beam sent based on CSI-RS2) having the largest RSRP may be reported.

In an embodiment, the offset information further includes at least one of the following: an angle or an angle of departure/angle of arrival (AoD/AoA) direction of a line of sight (LOS).

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment five

FIG. 6 is a fifth flowchart of an information reporting method according to an embodiment of the present application. The embodiment is further optimized and extended on the basis of the solutions described above and can be combined with the optional implementations described above. As shown in FIG. 6, the information reporting method may include S601 to S603.

In S601, P CSI-RSs or P SSBs are received from a base station.

In S602, the P CSI-RSs or the P SSBs are measured to obtain RSRPs of the P CSI-RSs or RSRPs of the P SSBs.

In S603, the RSRPs of the P CSI-RSs or the RSRPs of the P SSBs are input into an AI model, confidence levels of the Q CSI-RSs or the Q SSBs are predicted through the AI model, and the confidence levels of the Q CSI-RSs or the Q SSBs are reported.

In an embodiment, the base station may send P beams based on CSI-RS1, CSI-RS2, ..., and CSI-RSP, and the terminal measures the P beams to obtain RSRPs of the P beams, respectively. The terminal may input the RSRP information of the P beams into the AI model, the AI model predicts and outputs confidence levels of Q beams, and the confidence levels of the Q beams are reported.

In an embodiment, the base station may also determine an optimal CSI-RS based on the confidence levels of the Q CSI-RSs reported by the terminal or determine an optimal SSB based on the confidence levels of the Q SSBs reported by the terminal. For example, if a confidence level of one or more CSI-RSs among the Q CSI-RSs or a confidence level of one or more SSBs among the Q SSBs is greater than a predetermined threshold, the base station may determine the one or more CSI-RSs as the optimal CSI-RS or the one or more SSBs as the optimal SSB.

In an embodiment, if the confidence level of each of the Q CSI-RSs or the confidence level of each of the Q SSBs is less than a predetermined threshold, the base station may determine a CSI-RS having the largest confidence level among the Q CSI-RSs as the optimal CSI-RS or an SSB having the largest confidence level among the Q SSBs as the optimal SSB, where the predetermined threshold is a threshold predefined by the base station or a threshold predefined by the base station and the terminal.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or the measurement information of other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment six

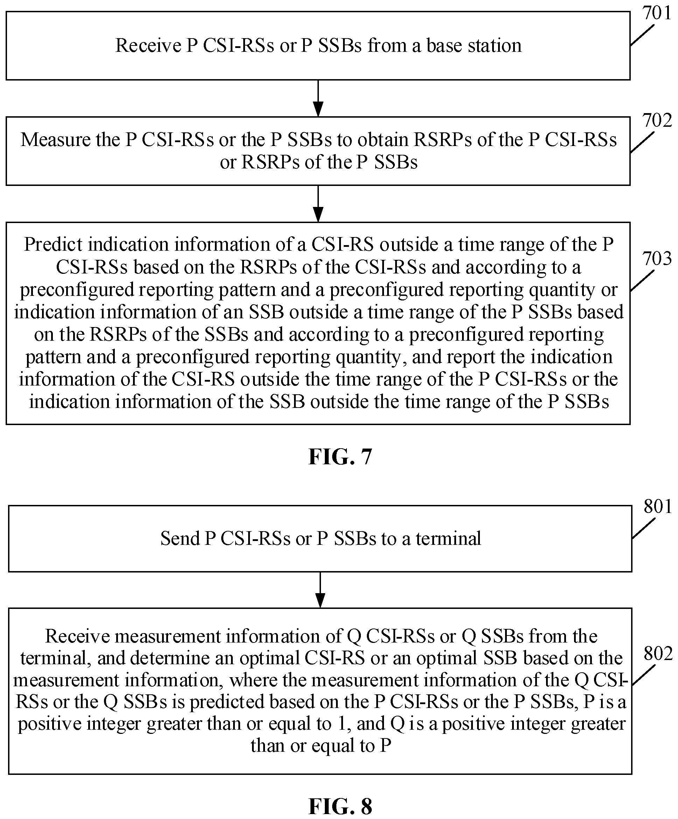

FIG. 7 is a sixth flowchart of an information reporting method according to an embodiment of the present application. The embodiment is further optimized and extended on the basis of the solutions described above and can be combined with the optional implementations described above. As shown in FIG. 7, the information reporting method may include S701 to S703.

In S701, P CSI-RSs or P SSBs are received from a base station.

In S702, the P CSI-RSs or the P SSBs are measured to obtain RSRPs of the P CSI-RSs or RSRPs of the P SSBs.

In S703, indication information of a CSI-RS outside a time range of the P CSI-RSs is predicted based on the RSRPs of the CSI-RSs and according to a preconfigured reporting pattern and a preconfigured reporting quantity or indication information of an SSB outside a time range of the P SSBs is predicted based on the RSRPs of the SSBs and according to a preconfigured reporting pattern and a preconfigured reporting quantity, and the indication information of the CSI-RS outside the time range of the P CSI-RSs or the indication information of the SSB outside the time range of the P SSBs is reported.

In an embodiment, when the terminal reports the measurement information of the Q CSI-RSs or the Q SSBs, the terminal may select K CSI-RSs from the Q CSI-RSs or select K SSBs from the Q SSBs according to an implementation algorithm of the terminal. For example, K CSI-RSs having the largest RSRP or K SSBs having the largest RSRP may be selected, or the K CSI-RSs or the K SSBs may be selected based on directions of arrival of different beams (that is, based on the spatial correlation between different received CSI-RSs). Therefore, the terminal gains a large degree of reporting freedom. However, if the AI is implemented at the base station side, the base station has the most say in what kind of inputs are needed for an AI model, so the base station may configure the pattern or guideline for the CRI/RSRP reported by the terminal. For example, the base station sends CSI-RS 1 to CRI-RS8 using different beams, respectively, and the maximum number of beams to be reported is configured as 4. Then there are different reporting patterns. Reporting pattern (1): the beams are reported in descending order of RSRPs. For example, {CRI2, CRI3, CRI1, CRI4} are reported sequentially. Reporting pattern (2): the beams are reported according to a uniform interval. For example, {CRI1, CRI3, CRI5, CRI7} are reported sequentially. Reporting pattern (3): the beams are reported in descending order of spatial correlations. For example, {CRI1, CRI2, CRI6, CRI7} are reported sequentially. In an embodiment, the terminal reports the beams at the current reporting time according to a first reporting pattern (pattern 1) and reports the beams at the next reporting time according to a second reporting pattern (pattern2). For example, {CRI1, CRI3, CRI5, CRI7} are reported sequentially at the current reporting time, and { CRI2, CRI4, CRI6, CRI8} are reported sequentially at the next reporting time.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or the measurement information of other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment seven

FIG. 8 is a seventh flowchart of an information reporting method according to an embodiment of the present application. The method may be executed by an information reporting apparatus or a base station. The apparatus or the base station may be implemented by software and/or hardware and may be integrated into any intelligent device having a network communication function. As shown in FIG. 7, the information reporting method may include S801 to S802.

In S801, P CSI-RSs or P SSBs are sent to a terminal.

In S802, measurement information of Q CSI-RSs or Q SSBs is received from the terminal, and an optimal CSI-RS or an optimal SSB is determined based on the measurement information, where the measurement information of the Q CSI-RSs or the Q SSBs is predicted based on the P CSI-RSs or the P SSBs, P is a positive integer greater than or equal to 1, and Q is a positive integer greater than or equal to P.

In an embodiment, the base station sends P CSI-RSs or P SSBs to the terminal, and the terminal measures the P CSI-RSs or the P SSBs to obtain RSRPs of the P CSI-RSs or RSRPs of the P SSBs, predicts measurement information of Q CSI-RSs based on the RSRPs of the P CSI-RSs or predicts measurement information of Q SSBs based on the RSRPs of the P SSBs, and reports the measurement information of the Q CSI-RSs or the measurement information of the Q SSBs.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or the measurement information of other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment eight

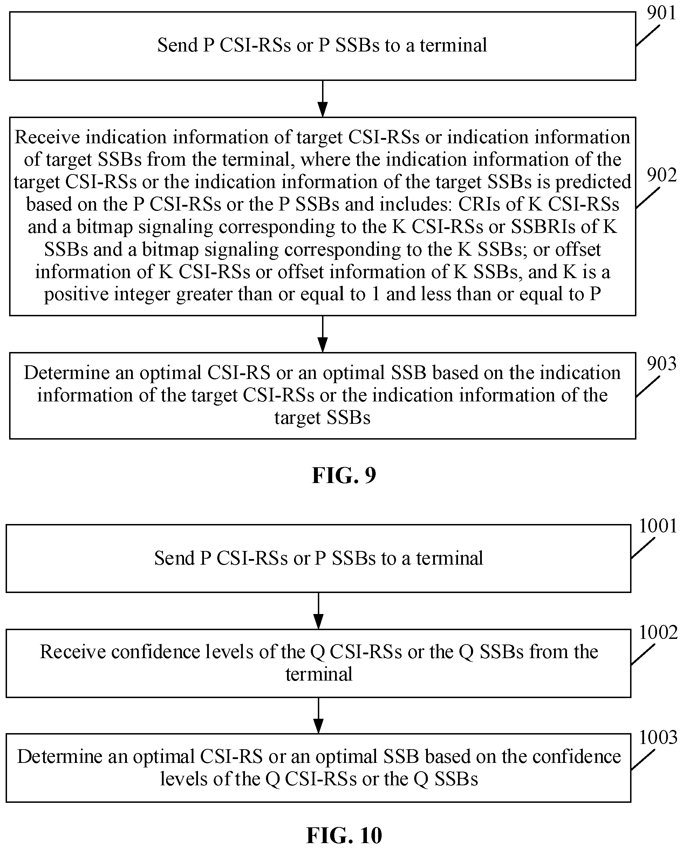

FIG. 9 is an eighth flowchart of an information reporting method according to an embodiment of the present application. The embodiment is further optimized and extended on the basis of the solutions described above and can be combined with the optional implementations described above. As shown in FIG. 9, the information reporting method may include S901 to S903.

In S901, P CSI-RSs or P SSBs are sent to a terminal.

In S901, the base station sends P CSI-RSs or P SSBs to the terminal. For example, the base station may send P beams to the terminal based on P CSI-RSs, where P is a positive integer greater than or equal to 1. For example, the base station may send a beam 1 to the terminal based on CSI-RSI1, send a beam 2 to the terminal based on CSI-RS2, ..., and send a beam P to the terminal based on CSI-RSP. Therefore, the terminal may receive the beams sent by the base station based on the CSI-RSs.

In S902, indication information of target CSI-RSs or indication information of target SSBs is received from the terminal, where the indication information of the target CSI-RSs or the indication information of the target SSBs is predicted based on the P CSI-RSs or the P SSBs and includes: CRIs of K CSI-RSs and a bitmap signaling corresponding to the K CSI-RSs or SSBRIs of K SSBs and a bitmap signaling corresponding to the K SSBs; or offset information of K CSI-RSs or offset information of K SSBs, and K is a positive integer greater than or equal to 1 and less than or equal to P.

In S902, the base station may receive indication information of target CSI-RSs or indication information of target SSBs from the terminal, where the indication information of the target CSI-RSs or the indication information of the target SSBs is predicted based on the P CSI-RSs or the P SSBs and includes: CRIs of K CSI-RSs and a bitmap signaling corresponding to the K CSI-RSs or SSBRIs of K SSBs and a bitmap signaling corresponding to the K SSBs. In an embodiment, the terminal may sort the predicted target CSI-RSs or the predicted target SSBs in descending order according to values of RSRPs of the predicted target CSI-RSs or values of RSRPs of the predicted target SSBs, select K CSI-RSs from the P CSI-RSs or K SSBs from the P SSBs according to a sorting result, calculate a bitmap signaling corresponding to the K CSI-RSs or a bitmap signaling corresponding to the K SSBs, and report CRIs of the K CSI-RSs and the bitmap signaling corresponding to the K CSI-RSs or SSBRIs of the K SSBs and the bitmap signaling corresponding to the K SSBs to the base station. In another embodiment, the terminal may input the RSRPs of the CSI-RSs or the RSRPs of the SSBs into an AI model, output RSRPs of the Q CSI-RSs or RSRPs of the Q SSBs through the AI model, select K CSI-RSs from the Q CSI-RSs or K SSBs from the Q SSBs, calculate offset information of each of the K CSI-RSs or offset information of each of the K SSBs, and report the offset information of each of the K CSI-RSs or the offset information of each of the K SSBs to the base station, where Q is a positive integer greater than or equal to P.

In S903, an optimal CSI-RS or an optimal SSB is determined based on the indication information of the target CSI-RSs or the indication information of the target SSBs.

In S903, the base station may determine an optimal CSI-RS or an optimal SSB based on the indication information of the target CSI-RSs or the indication information of the target SSBs. For example, if a confidence level of one or more CSI-RSs among the Q beams or a confidence level of one or more SSBs among the Q beams is greater than a predetermined threshold, the base station may determine the one or more CSI-RSs as the optimal CSI-RS or the one or more SSBs as the optimal SSB. If the confidence level of each of the Q CSI-RSs or the confidence level of each of the Q SSBs is less than a predetermined threshold, the base station may determine a CSI-RS having the largest confidence level among the Q CSI-RSs as the optimal CSI-RS or an SSB having the largest confidence level among the Q SSBs as the optimal SSB.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or the measurement information of other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment nine

FIG. 10 is a ninth flowchart of an information reporting method according to an embodiment of the present application. The embodiment is further optimized and extended on the basis of the solutions described above and can be combined with the optional implementations described above. As shown in FIG. 10, the information reporting method may include S1001 to S1003.

In S1001, P CSI-RSs or P SSBs are sent to a terminal.

In S1002, confidence levels of the Q CSI-RSs or the Q SSBs are received from the terminal.

In S1003, an optimal CSI-RS or an optimal SSB is determined based on the confidence levels of the Q CSI-RSs or the Q SSBs.

For example, the base station may send P beams based on CSI-RS1, CSI-RS2, ..., and CSI-RSP, and the terminal measures the P beams to obtain RSRPs of the P beams, respectively. The terminal inputs the RSRP information of the P beams into an AI model, the AI model predicts and outputs confidence levels of Q beams, and the confidence levels of the Q beams are reported. The base station may determine an optimal beam based on the confidence levels of the Q beams reported by the terminal.

In the information reporting method provided by the embodiment of the present application, the terminal receives P CSI-RSs or P SSBs from the base station, measures the P CSI-RSs or the P SSBs to obtain RSRPs of the P CSI-RSs or RSRPs of the P SSBs, predicts measurement information of Q CSI-RSs or Q SSBs based on the RSRPs of the P CSI-RSs or the RSRPs of the P SSBs, and reports the measurement information. That is, in the solution of the present application, the terminal just needs to measure part of CSI-RSs or part of SSBs to predict the measurement information of other CSI-RSs or the measurement information of other SSBs and thus does not need to measure all of the CSI-RSs or all of the SSBs. However, in the related art, the UE may need to pool receive beams to achieve the scanning of the receive beams, and the base station may also need to pool transmit beams to achieve the scanning of the transmit beams. The exhaustive scanning of all the transceive beam pairs in the codebook is an optimal beam training scheme, but such a scheme may cause an excessive training overhead, high measurement power consumption, and a large processing delay. Therefore, compared with the related art, the information reporting method provided by the embodiment of the present application can reduce the beam training overhead in the time domain or the spatial domain and obtain an ideal beamforming gain and an ideal spectral efficiency under the condition of a smaller beam training overhead. Moreover, the solution of the embodiment of the present application is simple and convenient to implement, is easy to popularize, and can be broadly applied.

### Embodiment ten

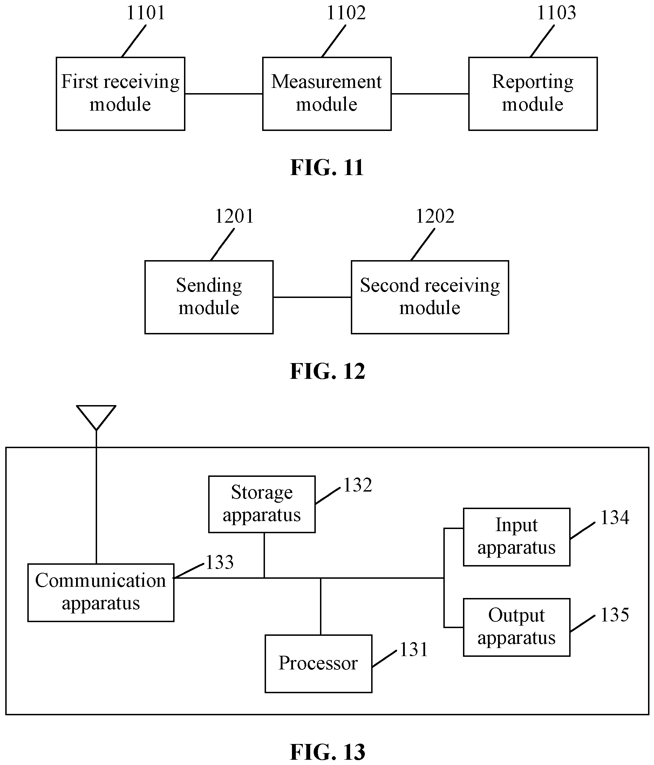

FIG. 11 is a first structure diagram of an information reporting apparatus according to an embodiment of the present application. As shown in FIG. 11, the information reporting apparatus includes a first receiving module 1101, a measurement module 1102, and a reporting module 1103.

The first receiving module 1101 is configured to receive P CSI-RSs or P SSBs from a base station.

The measurement module 1102 is configured to measure the P CSI-RSs or the P SSBs to obtain RSRPs of the P CSI-RSs or RSRPs of the P SSBs.

The reporting module 1103 is configured to predict measurement information of Q CSI-RSs or Q SSBs based on the RSRPs of the P CSI-RSs or the RSRPs of the P SSBs, and report the measurement information, where P is a positive integer greater than or equal to 1, and Q is a positive integer greater than or equal to P.

The above information reporting apparatus can execute the method provided by any embodiment of the present application and has corresponding functional modules and beneficial effects for executing the method. For technical details not described in detail in the embodiment, reference may be made to the information reporting method provided by Embodiment one to Embodiment six of the present application.

### Embodiment eleven

FIG. 12 is a second structure diagram of an information reporting apparatus according to an embodiment of the present application. As shown in FIG. 12, the information reporting apparatus includes a sending module 1201 and a second receiving module 1202.

The sending module 1201 is configured to send P CSI-RSs or P SSBs to a terminal.

The second receiving module 1202 is configured to receive measurement information of Q CSI-RSs or Q SSBs from the terminal, and determine an optimal CSI-RS or an optimal SSB based on the measurement information, where the measurement information of the Q CSI-RSs or the Q SSBs is predicted based on the P CSI-RSs or the P SSBs, P is a positive integer greater than or equal to 1, and Q is a positive integer greater than or equal to P.

The above information reporting apparatus can execute the method provided by any embodiment of the present application and has corresponding functional modules and beneficial effects for executing the method. For technical details not described in detail in the embodiment, reference may be made to the information reporting method provided by Embodiment seven to Embodiment nine of the present application.

### Embodiment twelve

FIG. 13 is a structure diagram of a communication node according to an embodiment of the present application. As shown in FIG. 13, the communication node provided by the present application includes one or more processors 131 and a storage apparatus 132. One or more processors 131 may be provided in the communication node, and one processor 131 is illustrated as an example in FIG. 13. The storage apparatus 132 is configured to store one or more programs. The one or more programs, when executed by the one or more processors 131, cause the one or more processors 131 to perform the information reporting method described in the embodiments of the present application.

The communication node further includes a communication apparatus 133, an input apparatus 134, and an output apparatus 135.

The processor 131, the storage apparatus 132, the communication apparatus 133, the input apparatus 134, and the output apparatus 55 in the communication node may be connected via a bus or in other manners, and the connection via a bus is illustrated as an example in FIG. 13.

The input apparatus 134 may be used for receiving input digital or character information and generating keying signal input related to user settings and function control of the communication node. The output apparatus 135 may include a display device such as a display screen.

The communication apparatus 133 may include a receiver and a transmitter. The communication apparatus 133 is configured to perform information reporting under the control of the processor 131.

As a computer-readable storage medium, the storage apparatus 132 may be configured to store software programs, computer-executable programs and modules, such as program instructions/modules (for example, the first receiving module 1101, the measurement module 1102, and the reporting module 1103 in the information reporting apparatus) corresponding to the information reporting method described in the embodiments of the present application. The storage apparatus 132 may include a program storage region and a data storage region. The program storage region may store an operating system and an application program required by at least one function. The data storage region may store data created according to the use of the device. In addition, the storage apparatus 132 may include a high-speed random-access memory and may also include a non-volatile memory, such as at least one magnetic disk memory, a flash memory or another non-volatile solid-state memory. In some examples, the storage apparatus 132 may further include memories which are remotely disposed with respect to the processor 131. These remote memories may be connected to the communication node via a network. Examples of the preceding network include, but are not limited to, the Internet, an intranet, a local area network, a mobile communication network and a combination thereof.

### Embodiment thirteen

The embodiments of the present application further provide a storage medium. The storage medium is configured to store a computer program, and the computer program, when executed by a processor, causes the processor to perform any method described in the present application. The storage medium is configured to store a computer program, and the computer program, when executed by a processor, causes the processor to perform any method described in the embodiments of the present application.

For example, an information reporting method may be performed. The method is applied to a terminal and includes the following.

P CSI-RSs or P SSBs are received from a base station.

The P CSI-RSs or the P SSBs are measured to obtain RSRPs of the P CSI-RSs or RSRPs of the P SSBs.

Measurement information of Q CSI-RSs or Q SSBs is predicted based on the RSRPs of the P CSI-RSs or the RSRPs of the P SSBs, and the measurement information is reported, where P is a positive integer greater than or equal to 1, and Q is a positive integer greater than or equal to P.

The computer storage medium in the embodiments of the present application may adopt any combination of one or more computer-readable media. The computer-readable medium may be a computer-readable signal medium or a computer-readable storage medium. The computer-readable storage medium may be, but is not limited to, an electrical, magnetic, optical, electromagnetic, infrared or semiconductor system, apparatus or device or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory or any suitable combination thereof. The computer-readable storage medium may be any tangible medium that can contain or store a program for use by or in connection with an instruction execution system, apparatus or device.

The computer-readable signal medium may include a propagated data signal with computer-readable program codes embodied therein, for example, in a baseband or as part of a carrier wave. Such a propagated data signal may be in multiple forms, including but not limited to, an electromagnetic signal, an optical signal or any suitable combination thereof. The computer-readable signal medium may further be any computer-readable medium that is not a computer-readable storage medium and can send, propagate or transport a program for use by or in connection with an instruction execution system, apparatus or device.

The program codes included on the computer-readable medium may be transmitted via any suitable medium which includes, but is not limited to, a wireless medium, a wire, an optical cable, a radio frequency (RF) or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a scenario involving the remote computer, the remote computer may be connected to the user computer through any type of network, including a local area network (LAN) or a wide area network (WAN) or may be connected to an external computer (for example, through the Internet using an Internet service provider).

The preceding are example embodiments of the present application and are not intended to limit the scope of the present application.

It is to be understood by those skilled in the art that the term user terminal covers any suitable type of wireless user device, for example, a mobile phone, a portable data processing apparatus, a portable web browser or a vehicle-mounted mobile station.

Generally speaking, the embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application has been provided above through exemplary and non-restrictive examples. However, considering the drawings and the claims, various modifications and adjustments to the preceding embodiments are apparent to those skilled in the art without departing from the scope of the present application. Accordingly, the proper scope of the present application is determined according to the claims.

## Claims

1. An information reporting method, applied to a terminal, comprising:
receiving P channel state information reference signals (CSI-RSs) or P synchronization signal blocks (SSBs) from a base station;
measuring the P CSI-RSs or the P SSBs to obtain reference signal received powers (RSRPs) of the P CSI-RSs or RSRPs of the P SSBs; and
predicting measurement information of Q CSI-RSs or Q SSBs based on the RSRPs of the P CSI-RSs or the RSRPs of the P SSBs, and reporting the measurement information;
wherein P is a positive integer greater than or equal to 1, and Q is a positive integer greater than or equal to P.

2. The method of claim 1, wherein predicting the measurement information of the Q CSI-RSs or the Q SSBs based on the RSRPs of the P CSI-RSs or the RSRPs of the P SSBs comprises:
predicting target CSI-RSs or target SSBs based on the RSRPs of the P CSI-RSs or the RSRPs of the P SSBs; and
calculating indication information of the target CSI-RSs or indication information of the target SSBs, and determining the indication information of the target CSI-RSs or the indication information of the target SSBs as the measurement information.

3. The method of claim 2, wherein predicting measurement information of the target CSI-RSs or the target SSBs based on the RSRPs of the P CSI-RSs or the RSRPs of the P SSBs comprises:
inputting the RSRPs of the P CSI-RSs or the RSRPs of the P SSBs into an artificial intelligence (AI) model, and predicting the measurement information of the target CSI-RSs or the target SSBs through the AI model.

4. The method of claim 2, wherein calculating the indication information of the target CSI-RSs or the indication information of the target SSBs comprises:
sorting predicted CSI-RSs or predicted SSBs in descending order according to values of RSRPs;
selecting K CSI-RSs from the P CSI-RSs or K SSBs from the P SSBs according to a sorting result, and calculating a bitmap signaling corresponding to the K CSI-RSs or a bitmap signaling corresponding to the K SSBs; and
determining CSI-RS resource indicators (CRIs) of the K CSI-RSs and the bitmap signaling corresponding to the K CSI-RSs as the indication information of the target CSI-RSs or determining SSB resource indicators (SSBRIs) of the K SSBs and the bitmap signaling corresponding to the K SSBs as the indication information of the target SSBs;
wherein K is a positive integer greater than or equal to 1 and less than or equal to P.

5. The method of claim 2, wherein calculating the indication information of the target CSI-RSs or the indication information of the target SSBs comprises:
inputting the RSRPs of the P CSI-RSs or the RSRPs of the P SSBs into an AI model, and outputting RSRPs of the Q CSI-RSs or RSRPs of the Q SSBs from the AI model; and selecting K CSI-RSs from the Q CSI-RSs or K SSBs from the Q SSBs; wherein Q is a positive integer greater than or equal to P;
calculating offset information of each of the K CSI-RSs or offset information of each of the K SSBs; and
determining the offset information of each of the K CSI-RSs as the indication information of the target CSI-RSs or determining the offset information of each of the K SSBs as the indication information of the target SSBs.

6. The method of claim 5, wherein calculating the offset information of each of the K CSI-RSs or the offset information of each of the K SSBs comprises:
calculating offset information of a CRI of each of the K CSI-RSs with respect to a CRI of one CSI-RS among CSI-RSs that have been sent or offset information of an SSBRI of each of the K SSBs with respect to an SSBRI of one SSB among SSBs that have been sent; and
determining the offset information of the CRI of each of the K CSI-RSs with respect to the CRI of the one CSI-RS as the offset information of each of the K CSI-RSs or the offset information of the SSBRI of each of the K SSBs with respect to the SSBRI of the one SSB as the offset information of each of the K SSBs.

7. The method of claim 5, wherein calculating the offset information of each of the K CSI-RSs or the offset information of each of the K SSBs comprises:
calculating offset information of a CRI of each of the K CSI-RSs with respect to a CRI of one CSI-RS having a largest RSRP among CSI-RSs that have been sent or offset information of an SSBRI of each of the K SSBs with respect to an SSBRI of one SSB having a largest RSRP among SSBs that have been sent; and
determining the offset information of the CRI of each of the K CSI-RSs with respect to the CRI of the one CSI-RS having the largest RSRP as the offset information of each of the K CSI-RSs or the offset information of the SSBRI of each of the K SSBs with respect to the SSBRI of the one SSB having the largest RSRP as the offset information of each of the K SSBs.

8. The method of claim 6 or 7, wherein the offset information further comprises at least one of the following: an angle or an angle of departure/angle of arrival (AoD/AoA) direction of a line of sight (LOS).

9. The method of claim 1, wherein predicting the measurement information of Q CSI-RSs or Q SSBs based on the RSRPs of the P CSI-RSs or the RSRPs of the P SSBs comprises:
inputting the RSRPs of the P CSI-RSs or the RSRPs of the P SSBs into an AI model, and predicting confidence levels of the Q CSI-RSs or the Q SSBs through the AI model; and
determining the confidence levels of the Q CSI-RSs or the Q SSBs as the measurement information.

10. The method of claim 1, wherein predicting the measurement information of Q CSI-RSs or Q SSBs based on the RSRPs of the P CSI-RSs or the RSRPs of the P SSBs comprises:
predicting indication information of a CSI-RS outside a time range of the P CSI-RSs based on the RSRPs of the P CSI-RSs and according to a preconfigured reporting pattern and a preconfigured reporting quantity or indication information of an SSB outside a time range of the P SSBs based on the RSRPs of the P SSBs and according to a preconfigured reporting pattern and a preconfigured reporting quantity; and
determining the indication information of the CSI-RS outside the time range of the P CSI-RSs or the indication information of the SSB outside the time range of the P SSBs as the measurement information.

11. The method of claim 10, wherein predicting the indication information of the CSI-RS outside the time range of the P CSI-RSs based on the RSRPs of the P CSI-RSs or the indication information of the SSB outside the time range of the P SSBs based on the RSRPs of the P SSBs comprises:
determining indication information to be reported at a current reporting time of a CSI-RS among the P CSI-RSs based on the RSRPs of the P CSI-RSs or indication information to be reported at a current reporting time of an SSB among the P SSBs based on the RSRPs of the P SSBs;
predicting indication information to be reported at a next reporting time of a CSI-RS according to the indication information to be reported at the current reporting time of the CSI-RS or indication information to be reported at a next reporting time of an SSB according to the indication information to be reported at the current reporting time the SSB; and
determining the indication information to be reported at the next reporting time of the CSI-RS as the indication information of the CSI-RS outside the time range of the P CSI-RSs or the indication information to be reported at the next reporting time of the SSB as the indication information of the SSB outside the time range of the P SSBs.

12. The method of claim 10, wherein the preconfigured reporting pattern comprises, but is not limited to, one of the following: reporting in descending order of RSRPs, reporting according to an index interval, or reporting in descending order of spatial correlations.

13. An information reporting method, applied to a base station, comprising:
sending P channel state information reference signals (CSI-RSs) or P synchronization signal blocks (SSBs) to a terminal; and
receiving measurement information of Q CSI-RSs or Q SSBs from the terminal, and determining an optimal CSI-RS or an optimal SSB based on the measurement information, wherein the measurement information of the Q CSI-RSs or the Q SSBs is predicted based on the P CSI-RSs or the P SSBs;
wherein P is a positive integer greater than or equal to 1, and Q is a positive integer greater than or equal to P.

14. The method of claim 13, wherein receiving the measurement information of the Q CSI-RSs or the Q SSBs from the terminal, wherein the measurement information of the Q CSI-RSs or the Q SSBs is predicted based on the P CSI-RSs or the P SSBs, comprises:
receiving indication information of target CSI-RSs or indication information of target SSBs from the terminal; wherein the indication information of the target CSI-RSs or the indication information of the target SSBs is predicted based on the P CSI-RSs or the P SSBs and comprises: CSI-RS resource indicators (CRIs) of K CSI-RSs and a bitmap signaling corresponding to the K CSI-RSs or SSB resource indicators (SSBRIs) of K SSBs and a bitmap signaling corresponding to the K SSBs; or offset information of K CSI-RSs or offset information of K SSBs;
wherein K is a positive integer greater than or equal to 1 and less than or equal to P.

15. The method of claim 13, wherein receiving the measurement information of the Q CSI-RSs or the Q SSBs from the terminal, wherein the measurement information of the Q CSI-RSs or the Q SSBs is predicted based on the P CSI-RSs or the P SSBs, comprises:
receiving confidence levels of the Q CSI-RSs or the Q SSBs from the terminal, and determining the confidence levels of the Q CSI-RSs or the Q SSBs as the measurement information, wherein the confidence levels of the Q CSI-RSs or the Q SSBs are predicted based on the P CSI-RSs or the P SSBs.

16. The method of claim 15, wherein determining the optimal CSI-RS or the optimal SSB based on the measurement information comprises:
in response to a confidence level of one or more CSI-RSs among the Q CSI-RSs or a confidence level of one or more SSBs among the Q SSBs being greater than a predetermined threshold, determining the one or more CSI-RSs as the optimal CSI-RS or the one or more SSBs as the optimal SSB.

17. The method of claim 15, wherein determining the optimal CSI-RS or the optimal SSB based on the measurement information comprises:
in response to the confidence level of each of the Q CSI-RSs or the confidence level of each of the Q SSBs being less than a predetermined threshold, determining a CSI-RS having a largest confidence level among the Q CSI-RSs as the optimal CSI-RS or an SSB having a largest confidence level among the Q SSBs as the optimal SSB.

18. The method of claim 13, wherein receiving the measurement information of the Q CSI-RSs or the Q SSBs from the terminal, wherein the measurement information of the Q CSI-RSs or the Q SSBs is predicted based on the P CSI-RSs or the P SSBs, comprises:
receiving indication information of a CSI-RS outside a time range of the P CSI-RSs or indication information of an SSB outside a time range of the P SSBs from the terminal, wherein the indication information of the CSI-RS outside the time range of the P CSI-RSs is predicted based on the P CSI-RSs or the indication information of the SSB outside the time range of the P SSBs is predicted based on the P SSBs.

19. An information reporting apparatus, comprising a first receiving module, a measurement module, and a reporting module; wherein
the first receiving module is configured to receive P channel state information reference signals (CSI-RSs) or P synchronization signal blocks (SSBs) from a base station;
the measurement module is configured to measure the P CSI-RSs or the P SSBs to obtain reference signal received powers (RSRPs) of the P CSI-RSs or RSRPs of the P SSBs; and
the reporting module is configured to predict measurement information of Q CSI-RSs or Q SSBs based on the RSRPs of the P CSI-RSs or the RSRPs of the P SSBs and report the measurement information;
wherein P is a positive integer greater than or equal to 1, and Q is a positive integer greater than or equal to P.

20. An information reporting apparatus, comprising a sending module and a second receiving module; wherein
the sending module is configured to send P channel state information reference signals (CSI-RSs) or P synchronization signal blocks (SSBs) to a terminal; and
the second receiving module is configured to receive measurement information of Q CSI-RSs or Q SSBs from the terminal and determine an optimal CSI-RS or an optimal SSB based on the measurement information, wherein the measurement information of the Q CSI-RSs or the Q SSBs is predicted based on the P CSI-RSs or the P SSBs;
wherein P is a positive integer greater than or equal to 1, and Q is a positive integer greater than or equal to P.

21. A communication node, comprising:
one or more processors; and
a memory, configured to store one or more programs;
wherein the one or more programs, when executed by the one or more processors, cause the one or more processors to perform the information reporting method of any one of claims 1 to 12 or the information reporting method of any one of claims 13 to 18.

22. A storage medium storing a computer program which, when executed by a processor, causes the processor to perform the information reporting method of any one of claims 1 to 12 or the information reporting method of any one of claims 13 to 18.
